(19) Europäisches Patentamt / European Patent Office / Office européen des brevets

(11) **EP 3 746 821 B1**

## (12) EUROPEAN PATENT SPECIFICATION

(45) Date of publication and mention
of the grant of the patent:
**30.11.2022 Bulletin 2022/48**

(21) Application number: **19701374.1**

(22) Date of filing: **29.01.2019**

(51) International Patent Classification (IPC):
*G02B 1/06* (2006.01)    *G02C 7/08* (2006.01)
*C08L 83/00* (2006.01)

(52) Cooperative Patent Classification (CPC):
**G02B 1/06; C08L 83/00; G02C 7/085**

(86) International application number:
**PCT/EP2019/052113**

(87) International publication number:
**WO 2019/149694 (08.08.2019 Gazette 2019/32)**

(54) **PHASE CHANGE OPTICAL DEVICE**

OPTISCHE PHASENWECHSELVORRICHTUNG

DISPOSITIF OPTIQUE À CHANGEMENT DE PHASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2018 EP 18305099**

(43) Date of publication of application:
**09.12.2020 Bulletin 2020/50**

(73) Proprietors:
- **ESSILOR INTERNATIONAL
94220 Charenton-Le-Pont (FR)**
- **UNIVERSITE DE MONTPELLIER
34090 Montpellier (FR)**
- **CENTRE NATIONAL DE
LA RECHERCHE SCIENTIFIQUE -CNRS-
75016 Paris (FR)**

(72) Inventors:
- **ARCHAMBEAU, Samuel
94227 CHARENTON LE PONT CEDEX (FR)**
- **BIVER, Claudine
94220 CHARENTON-LE-PONT (FR)**
- **ETIENNE, Pascal
34090 MONTPELLIER (FR)**
- **CALAS ETIENNE, Sylvie
34090 MONTPELLIER (FR)**
- **BONNET, Laurent
75794 PARIS Cédex 16 (FR)**

(74) Representative: **Plasseraud IP
66, rue de la Chaussée d'Antin
75440 Paris Cedex 09 (FR)**

(56) References cited:
**US-A1- 2013 309 453    US-A1- 2016 160 557**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the field of optical devices, and more specifically to the field of active optical devices.

Optical devices with a variable refractive index have an increasing number of applications, especially in the field of eyewear. These devices usually integrate liquid crystals, which orientation and optical properties change when these are submitted to an electrical field. However, liquid crystals most often need to be used together with a polarizer due to the liquid crystals being birefringent in at least one of their orientation. Polarizers are costly and decrease the overall transparency of the optical device. As such, these are unsuitable for an ophthalmic use.

In order to bypass the need of polarizers in active optical devices, it is known to use a system comprising two layers of liquid crystal, with crossed orientations. However, such systems are complicated to implement as both layers have to present the exact same thickness. Furthermore, such system properties depend on the incident angle of the light which makes it unsuitable for a variety of uses.

Another known alternative to polarizers consists in using cholesteric liquid crystals. However, cholesteric liquid crystals are light-diffusing compounds and difficult to orient in the first place.

Polymer dispersed crystal liquids (PDCL) do constitute a polarizer-free alternative, but these are not satisfying either as their layers are generally light-diffusing and do not comprise enough crystal liquids to enable a satisfactory change in refractive index.

There is thus a need to provide a transparent optical device which refractive index can be significantly changed. Most importantly, such optical device has to be polarizer-free and must not be light-diffusing. The document US 2016/160557 A1 discloses a smart window applied to various industries, such as transportation, information display, and architecture. The document US 2013/309453 A1 discloses an optical device comprising an aerogel located in an encapsulating structure impregnated with a liquid.

The present invention answers this need thanks to an optical device comprising all the features defined in claim 1. Claims 2-10 define additional embodiments of the invention.

An aerogel is a material similar to a gel, in which the liquid phase has been replaced by a gas. Aerogels are ultraporous materials, the porosity of which typically reaches at least 75% of their volume. Such a high porosity gives these solids advantageous properties. Indeed, aerogels demonstrate very low refractive indexes, close to the air index ($n < 1.35$), aerogels are also very light. Aerogels are typically very prone to capillary strain, and the amount of water present in the open air can be enough to induce cracks in the aerogel.

The encapsulating structure allows protecting the aerogel of the present invention from the open air, since cracks are very much unsuited in most optical devices.

The invention solves the above-mentioned technical problem because it has been found that optically non isotropic material such as liquid crystals are in an isotropic state when embedded in an aerogel. Without being bound by this theory, the Applicant believes it is due to the aerogel porosities being small enough to induce a steric constraint on the optically non isotropic material molecules, thus preventing these to orient each other when they are not submitted to any electrical field.

Electrodes are arranged in order to be able to generate an electrical field in the encapsulating structure embedding the optically non isotropic material, thus orienting the latter and modifying the overall refractive index of the optical device. The encapsulating structure typically presents two faces separated by the aerogel, each face supporting one of the electrodes.

The electrodes can be of any type. Indium Tin Oxyde (ITO) is a favoured material because of its transparency and its good electrical properties. The electrodes can also include an array of selectively activable electrodes, so as to present a tunable shape. Such electrodes have been previously described in WO2015/136458 and FR1654021.

The electrodes can also demonstrate any suitable specific structure, such as the one described in WO 2010/040954, WO 2011/015753, or WO 2011/052013.

The optically non isotropic material molecules are typically oriented perpendicularly to the electrodes, that is to say in a direction parallel to the incident light in case the electrodes are positioned on the external faces of the optical device. As such, although the optically non isotropic material is in an homeotropic state, overall it is equivalent to an isotropic state for the incident light. The invention thus provides an optical medium which changes from a first isotropic state to a second isotropic state presenting a different refractive index than the first isotropic state.

The terms *optical index* and *refractive index* are used indifferently and relate to the same physical property. The method used to measure it is not relevant to the concept of the present invention since the present invention relates to a change of the optical index, depending on the fact that the material of interest is submitted to an electric field or not.

The optically non isotropic material can be birefringent, which means that the optical index is not the same depending on the direction of the incident light. Unless stated otherwise, for the purpose of the invention, the incident light is considered to be oriented in a direction perpendicular to the electrodes.

The optically non isotropic material is preferably in an isotropic state when no electrical field is applied in the encapsulating structure.

The aerogel has a porosity ratio which is preferably greater than 80%. The porosity ratio corresponds to the percentage of gas in the volume of the aerogel. It can be measured through helium pycnometry, or through any other suitable method. As a matter of fact, a high porosity ratio allows storing a higher amount of optically non isotropic material, which leads to a higher tunability of the optical index.

The optically non isotropic material can typically be nematic liquid crystal mixture. The nematic liquid crystals are convenient to synthetize, not too expensive, and demonstrate good compatibility with the present invention. However, any other type of liquid crystal mixture can be used for the purpose of the invention. For instance, although such materials are expensive and difficult to synthetize, a cholesteric phase containing a chiral doping compound could be incorporated in the optically non isotropic material.

The aerogel can comprise remnant parts of Tetra-methoxysilane, Tetraethoxysilane, Trimethoxysilane or Methyltrimethoxysilane mixed in a polymer binder. These can also be referred to as silicon based monomers.

The aerogel can be made by combining one of the group consisting of Tetra-methoxysilane, Tetraethoxysilane, Trimethoxysilane and Methyltrimethoxysilane with a polymer binder.

The polymer binder can be a polyvinyl acetate polymer with a weight average molecular weight greater than 50 000 g/mol, and preferably greater than 100 000 g/mol.

The encapsulating structure is preferably completely filled by the aerogel, and the aerogel has a thickness greater than 10 $\mu$m, preferably greater than 20 $\mu$m, more preferably greater than 50 $\mu$m. Indeed, a thick aerogel is steadier and is easier to fill completely with the optically non isotropic material. Furthermore, the aerogel is the optically active part of the optical device, which needs to be protected.

The first and second electrodes can be linked to an electronic device, configured to control the electric field generated in the encapsulating structure, and to a power source. This would allow the electronic device to indirectly control the optical index of the optical device.

According to the invention, the optical device is suitable to be a part of a spectacle lens, preferably a spectacle lens. Spectacle lenses are used to correct vision, however, the correction needed is not always the same. Most importantly, it changes with the distance at which the object to be envisioned is positioned. As such, it is very advantageous to provide a spectacle lens with a tunable optical index, that is to say a tunable correction.

The present invention also relates to a process for manufacturing an optical article, comprising the steps defined in claim 11. Claims 12-15 define additional embodiments of a process according to the invention.

The present invention will be more fully understood from the following detailed description of the embodiments thereof - to which the invention is not limited however - taken together with the drawings in which:

- Figure 1 is a schematic view of a device used to synthetize an aerogel,
- Figure 2 is a schematic view of an alternative way of synthetizing the aerogel, using a spacer,
- Figure 3 is a schematic view of the orientation of the optically non isotropic material molecules in the optical device of the invention, and
- Figure 4 are photos of an optical device according to the present invention between two crossed polarizers.

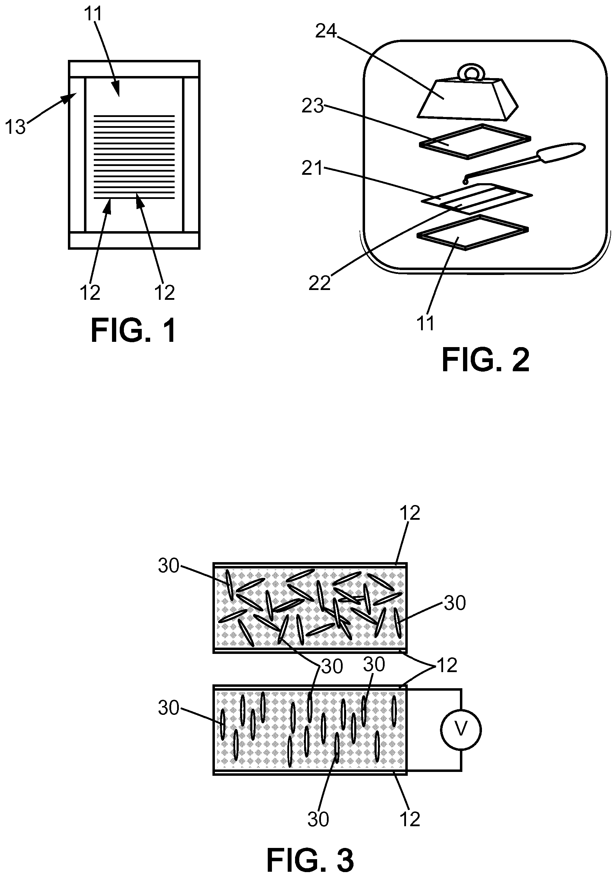

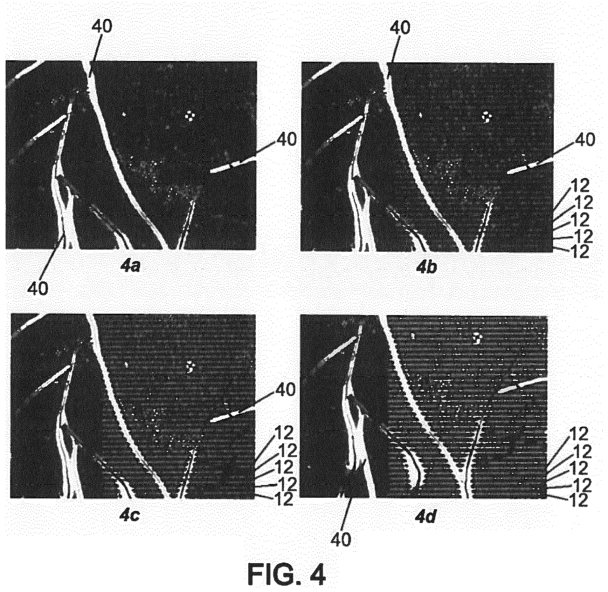

Figures 1 and 4 correspond to an embodiment of the present invention which allows good evidence of the properties of the optical article according to the invention, wherein the electrodes are positioned in the same plan. Figure 2 and 3 correspond to an embodiment with a higher interest in the field of optical spectacle, wherein two electrodes are positioned on each face of the optical device. However, the impregnated aerogel used is the same in both embodiments.

Synthesis of a gel

The following protocol allows obtaining uncracked aerogels, which present good resistance to impregnation by a liquid. Alternatively, the aerogel can be obtained according to the teachings of WO2012080658, which also provides satisfying aerogels for the purpose of the present invention.

A Tetramethoxylane (TMOS) precursor is used because its gelling properties are well known and the kinetics involved are fast and reliable. It is also possible to use different precursors, such as the tetraethoxylane, trimethoxysilane or Methyltrimethoxysilane without departing from the scope of the present invention.

Polyvinyle acetate (PVAc) with a molecular weight of 167,000 g per mole is used as a reagent of the synthesis of the aerogel. PVAc allows obtaining aerogels which are crack resistant, both during their synthesis and while being impregnating by a liquid of interest.

The aerogel is synthesized on a glass substrate 11 supporting Indium Tin Oxide (ITO) electrodes 12, positioned parallel to each other and spaced from each other by about 20 $\mu$m, in a comb manner. A tank is delimited on the substrate thanks to a Polyethylene Terephthalate (PET) film 13 stuck to the substrate by an adhesive, as shown in figure 1. The combined thickness of the PET film and of the adhesive is chosen so as to generate an aerogel with a thickness inferior

to 50 μm, preferably about 10 μm. A thickness of about 10 μm proved to reduce the amount of cracks.

Alternatively, a polytetrafluoroethylene (PTFE) spacer 21can be used, as shown on figure 2. The spacer is chosen with the desired thickness and can hold a window 22 designed to receive the sol.

An alcoholic PVAc solution is prepared. The PVAc used is for example the one sold by Aldrich, CAS: 9003-20-7, Ref: 18,248-6 and having a molecular weight of 167,000g per mole. The PVAc is dissolved in 96% ethanol at a concentration of 20% in weight. The complete dissolution of the PVAc takes at least four hour of steady agitation as well as several ultrasound sonications.

Alternatively, a partially hydrolyzed PVAc such as the one sold by Synthomer under the reference Synthomer Alcotex 359B could be used. The latter is already provided in a mixture methanol/methylacetate at a concentration of 26% by weight. It holds from 20 to 30% molar of hydrolyzed PVA groups, carried on chains with an average weight molecular weight of about 245,000 g/mol, which allows using the solution without any further modification.

A TMOS solution is incorporated to the PVAc solution. After a few minutes of additional stirring, an hydroxide ammonium solution at a concentration of $5.10^{-2}$ mol/l is added as well, under steady agitation. The relative volumes of these three reagents are 50% of PVAc, 33% of TMOS, and 17% of hydroxide ammonium.

Alternatively, an aqueous ammonia solution at a concentration of $1.5.10^{-3}$ mol/l can be used. This results in a gelling which lasts about 10 minutes and involves very little retraction of the gel in the gelling process.

Hydroxyde ammonium triggers the hydrolysis-condensation of TMOS, which leads to the gelling of the solution.

The stirring is preferably stopped before the end of the gelling process, e.g. about 2 minutes before the end of the gelling process so as to allow trapped air bubble to get back to the surface.

Optionally and so as to ease the laminating step, the glass substrate can be submitted to dioxygen plasma treatment. This allows cleaning the substrate and creating OH groups on the substrate so as to increase the adherence of the solution and of the ITO electrodes to the glass substrate.

An alternate way of preparing the glass substrate to the lamination of the gelling solution is to treat it with a regular sulfochromic acid solution by fully submerging each glass substrate in a sulfochromic acid solution at room temperature during one hour. Each substrate is then rinsed with distilled water, ITO electrodes are cleaned with a towel impregnated with 95% ethanol.

In order to obtain a layer, a drop of the gelling solution is positioned on the edges of the tank and rollers laminate the gelling solution into a liner layer on the glass substrate, which allows encapsulating the gelling solution into the tank.

Alternatively, when using a spacer 21, the gelling solution is carefully positioned in the center of the spacer window 22. The sample is then slowly covered with a silicon film 23 so as to avoid any air bubble, and a heavy plate 24 is applied on the silicon film so as to get rid of the surplus solution.

The laminated sample is then put in an alcoholic atmosphere for at least two hours so as to accelerate the ageing process of the gel while preventing any drying issue.

Turning the gel into an aerogel

The obtained gel is then put into a liquid $CO_2$ autoclave so as to turn it into an aerogel.

For that purpose, the reactor of the autoclave is first cooled to a temperature comprised between 0 and 10°C, preferably about 5°C. The liner layer of the gel is then separated from the glass substrate under alcoholic atmosphere so as to prevent untimely drying of the gel. The sample is then put into the reactor of the autoclave.

Liquid $CO_2$ is then incorporated in the autoclave so as to fill it completely, until pressure reaches about 60 bars. Temperature is then slowly raised back to room temperature which causes liquid $CO_2$ to replace the solvent trapped into the pores of the gel sample.

Temperature and pressure are then increased so as to turn the $CO_2$ into a supercritical phase. Typically, temperature is raised to 35 °C and pressure is raised to 100 bars. It is also possible to operate at 40°C and 90 bars; operating at a lower pressure is safer and can lead to a better yield.

Due to the $CO_2$ being in a single supercritical phase, the solvent can leave the gel sample as if evaporating but without submitting the organic network of the gel to important constraint.

Pressure inside the autoclave is then slowly decreased. Pressure inside the autoclave can be regulated by any suitable mean. Typically, pressure is regulated thanks to an evacuation valve. Pressure is then returned to atmospheric pressure. A neutral gas such as Argon or Azote is injected in the autoclave before retrieving the sample, so as to prevent any cracking when opening the reactor. The depressurizing step must be performed very slowly and can take up to more than six hours.

The obtained aerogel sample is then stored under vacuum so as to protect it from the atmospheric hygrometry which could induce cracks due to capillary strain.

Impregnating the aerogel

For the sake of this example, which corresponds to the embodiment illustrated on the figures, the liquid crystal sold by Merck under the reference E7 is used to impregnate the aerogel. Obviously, any suitable optically non isotropic material could be used without departing the scope of the present invention.

A drop of liquid crystal is positioned on the surface of the aerogel, e.g. by a micropipette. The liquid crystal impregnates the aerogel without causing any cracks. However, due to the liquid crystal being rather viscous, the impregnation can prove to be very slow. In order to accelerate the impregnation, the aerogel and the liquid crystal are heated to 80°C, which allows accelerating the impregnation without inducing any crack in the aerogel.

Characterization

The optical properties of the optical device according to the invention are appraised as follows, with and without the application of an electrical field.

Each molecule of optically non isotropic material typically shows an elongated shape along an axis. In its native form, such material is birefringent due to the anisotropic organization of the molecules.

However, when said material is impregnated into an aerogel in an optical device according to the invention and when no electrical field is applied, the molecules are oriented in an isotropic manner. This is shown on Figure 4 by observing the optical device according to the invention between to crossed polarizers: no birefringence is evidenced, except on a crack in the layer which corresponds to the white lines 40.

The applied electrical field is generated by applying a voltage between the electrodes 12. The molecules of optically non isotropic material tend to align their axis along the lines of fields. As such, if the electrodes are positioned face to face, perpendicularly to the incident light, the molecules 30 align in an homeotropic state which is equivalent to an isotropic state in the direction of the incident light, as shown on figure 3.

In another embodiment of the present invention, which corresponds to Figures 1 and 4, the electrodes are positioned in the same plan. In that case, the lines of field - and thus, the orientation of the molecules - are not positioned perpendicularly to the incident light. That causes the material to change from an isotropic state to an anisotropic state. When the material is in its anisotropic state, the overall optical device becomes birefringent. Such embodiment could have applications in devices in which transmission is not an issue and which can be combined to polarizers.

The orientation of the molecules along the lines of field causes the optical device to become birefringent which allows the region between the electrodes 12 to become visible, as shown in Figure 4. Figures 4a, 4b, 4c, and 4d consists of four different views of the same optical device exposed to an electrical field of 0V, 40V, 55V, and 60V respectively.

The change in the orientation of the molecules induces a change of optical index. When no electrical field is applied, the optical index of the optical device is n1 and can be expressed as a function of the ordinary index no and the extraordinary index ne of the optically non isotropic material, of the index of the aerogel na, and of the porosity ratio of the aerogel p, according to Equation 1.

$$n1 = p * \frac{(2no+ne)}{3} + (1-p) * na \qquad (1)$$

Similarly, when an electrical field is applied , the optical index of the optical device can be calculated according to Equation 2.

$$n2 = p * no + (1-p) * na \qquad (2)$$

It is thus possible to assess the change of optical index $\Delta n$ when an electrical field is applied by taking the difference of n1 and n2, which leads to Equation 3.

$$\Delta n = p * \frac{ne-no}{3} \qquad (3)$$

When the optically non isotropic material is a liquid crystal with ne-no = 0.4, and when the aerogel has a porosity ratio of 80%, the optical device allows a change of optical index $\Delta n$ of 0.106. The corresponding phase change can then be calculated by taking the thickness of the impregnated aerogel into account.

It is understood that the herein described embodiments do not limit the scope of the present invention and that it is possible to implement improvements without leaving the scope of the present invention.

Unless explicitly stated otherwise, the word "or" is equivalent to "and/or". Similarly, the word "one" or "a" is equivalent to "at least one", unless stated otherwise.

**Claims**

1. Optical device comprising :

   - an aerogel located in an encapsulating structure,
   - an optically non isotropic material (30) presenting a refractive index which can be changed upon submitting said material to an electrical field, preferentially a liquid crystal mixture, embedded in the aerogel, and
   - a first and a second electrodes (12) arranged to generate an electric field in the encapsulating structure,

   wherein the optical device is suitable to be a part of a spectacle lens.

2. The optical device of claim 1, wherein the optically non isotropic material is in an isotropic state when no electric field is applied in the encapsulating structure.

3. The optical device of any of claims 1 or 2, wherein the aerogel has a porosity ratio greater than 80%.

4. The optical device of any one of claims 1 to 3, wherein the optically non isotropic material is a nematic liquid crystal mixture.

5. The optical device of any one of claims 1 to 4, wherein the aerogel comprises remnant parts of Tetra-methoxysilane, Tetraethoxysilane, Trimethoxysilane or Methyltrimethoxysilane mixed in a polymer binder.

6. The optical device of any one of claims 1 to 5, wherein the aerogel is made by combining one of the group consisting of Tetra-methoxysilane, Tetraethoxysilane, Trimethoxysilane and Methyltrimethoxysilane with a polymer binder.

7. The optical device of any of claims 5 or 6, wherein the polymer binder is a polyvinyl acetate polymer with a weight average molecular weight greater than 50 000 g/mol, and preferably greater than 100 000 g/mol.

8. The optical device of any of claims 1 to 7, wherein the encapsulating structure is completely filled by the aerogel, and wherein the aerogel has a thickness greater than 10 $\mu$m, preferably greater than 20 $\mu$m, more preferably greater than 50 $\mu$m.

9. The optical device of any of claims 1 to 8, wherein the first and second electrodes are linked to an electronic device, configured to control the electric field generated in the encapsulating structure, and to a power source.

10. The optical device of any of claims 1 to 9, the optical device being a spectacle lens.

11. A process for manufacturing an optical article, wherein the optical article is suitable to be a part of a spectacle lens, the method comprising the steps of

    a. providing an encapsulating structure,
    b. providing a liquid crystal mixture (30) embedded in an aerogel inside said encapsulating structure, wherein the liquid crystal mixture embedded in an aerogel inside said encapsulating structure has a refractive index which can be changed upon submitting said crystal liquid to an electrical field.

12. The process of claim 11, wherein step b comprises a first sub-step of forming an aerogel and a second substep of embedding a liquid crystal mixture in the aerogel.

13. The process according to claim 12, wherein the first sub-step comprises the following elements:

    a. providing a composition comprising a solvent, a polymer binder and a silicone-based monomer,
    b. inducing an hydrolysis of the silicone-based monomer in the composition while shaping the forming gel in a shape fitting the encapsulating strucure, in order to form a gelated sample,
    c. placing the gelated sample in an alcoholic atmosphere.

14. The process of claim 13, the first sub-step further comprising the following steps:

    a. replacing the solvent remaining in the gelated sample by liquid CO2,
    b. providing conditions such that said liquid CO2 turns into supercritical CO2,
    c. cooling the obtained sample into an aerogel sample.
    d. embedding the liquid crystal mixture in the aerogel sample.

15. A process for changing index of an optical article according to any of claims 1 to 10, comprising two steps consisting of:

    a. operating the optical article in a first mode by generating a first electric field presenting a first voltage,
    b. switching to a second mode, by generating a second electric field presenting a second voltage different from the first voltage,

wherein one of the first voltage or the second voltage is chosen so as to orient the liquid crystals of the liquid crystal mixture in , and the other one of the first voltage and second voltage is 0V.


**Patentansprüche**

1. Optische Vorrichtung, umfassend:

    - ein Aerogel, das sich in einer Verkapselungsstruktur befindet,
    - ein optisch nicht isotropes Material (30) mit einem Brechungsindex, der verändert werden kann, wenn das Material einem elektrischen Feld ausgesetzt wird, vorzugsweise eine flüssigkristalline Mischung, in das Aerogel eingebettet, und
    - eine erste und eine zweite Elektrode (12), die dafür ausgelegt sind, ein elektrisches Feld in der Verkapselungsstruktur zu erzeugen,

wobei die optische Vorrichtung geeignet ist, Teil eines Brillenglases zu sein.

2. Optische Vorrichtung nach Anspruch 1, wobei sich das optisch nicht isotrope Material in einem isotropen Zustand befindet, wenn kein elektrisches Feld in der Verkapselungsstruktur angelegt ist.

3. Optische Vorrichtung nach einem der Ansprüche 1 oder 2, wobei das Aerogel einen Porositätsgrad von mehr als 80 % aufweist.

4. Optische Vorrichtung nach einem der Ansprüche 1 bis 3, wobei das optisch nicht isotrope Material eine nematische flüssigkristalline Mischung ist.

5. Optische Vorrichtung nach einem der Ansprüche 1 bis 4, wobei das Aerogel Restanteile von Tetra-Methoxysilan, Tetraethoxysilan, Trimethoxysilan oder Methyltrimethoxysilan in einem Polymerbindemittel gemischt umfasst.

6. Optische Vorrichtung nach einem der Ansprüche 1 bis 5, wobei das Aerogel hergestellt wird, indem eines aus der Gruppe bestehend aus Tetra-Methoxysilan, Tetraethoxysilan, Trimethoxysilan und Methyltrimethoxysilan mit einem Polymerbindemittel kombiniert wird.

7. Optische Vorrichtung nach einem der Ansprüche 5 oder 6, wobei das Polymerbindemittel ein Polyvinylacetatpolymer mit einem gewichtsmittleren Molekulargewicht von mehr als 50.000 g/mol und vorzugsweise mehr als 100.000 g/mol ist.

8. Optische Vorrichtung nach einem der Ansprüche 1 bis 7, wobei die Verkapselungsstruktur vollständig von dem Aerogel ausgefüllt ist und wobei das Aerogel eine Dicke größer als 10 $\mu$m, vorzugsweise größer als 20 $\mu$m und noch stärker bevorzugt größer als 50 $\mu$m hat.

9. Optische Vorrichtung nach einem der Ansprüche 1 bis 8, wobei die erste und die zweite Elektrode mit einer elektronischen Vorrichtung, die dafür ausgelegt ist, das in der Verkapselungsstruktur erzeugte elektrische Feld zu regeln, und mit einer Stromquelle verbunden sind.

10. Optische Vorrichtung nach einem der Ansprüche 1 bis 9, wobei die optische Vorrichtung ein Brillenglas ist.

11. Verfahren zum Herstellen eines optischen Artikels, wobei der optische Artikel geeignet ist, Teil eines Brillenglases zu sein, wobei das Verfahren die Schritte umfasst:

    a. Bereitstellen einer Verkapselungsstruktur,
    b. Bereitstellen einer flüssigkristallinen Mischung (30), eingebettet in ein Aerogel innerhalb der Verkapselungsstruktur, wobei die in ein Aerogel innerhalb der Verkapselungsstruktur eingebettete flüssigkristalline Mischung einen Brechungsindex aufweist, der verändert werden kann, wenn die kristalline Flüssigkeit einem elektrischen Feld ausgesetzt wird.

12. Verfahren nach Anspruch 11, wobei Schritt b einen ersten Teilschritt des Bildens eines Aerogels und einen zweiten Teilschritt des Einbettens einer flüssigkristallinen Mischung in das Aerogel umfasst.

13. Verfahren gemäß Anspruch 12, wobei der erste Teilschritt die folgenden Elemente umfasst:

    a. Bereitstellen einer Zusammensetzung, die ein Lösungsmittel, ein Polymerbindemittel und ein Monomer auf Silikonbasis umfasst,
    b. Induzieren einer Hydrolyse des Monomers auf Silikonbasis in der Zusammensetzung, während das formende Gel in eine Form gebracht wird, die zu der Verkapselungsstruktur passt, um eine gelierte Probe zu bilden,
    c. Einbringen der gelierten Probe in eine alkoholische Atmosphäre.

14. Verfahren nach Anspruch 13, wobei der erste Teilschritt ferner die folgenden Schritte umfasst:

    a. Ersetzen des in der gelierten Probe verbliebenen Lösungsmittels durch flüssiges $CO_2$,
    b. Schaffen von Bedingungen, unter denen sich das flüssige $CO_2$ in überkritisches $CO_2$ verwandelt,
    c. Kühlen der erhaltenen Probe zu einer Aerogel-Probe,
    d. Einbetten der flüssigkristallinen Mischung in die Aerogel-Probe.

15. Verfahren zum Ändern des Index eines optischen Artikels gemäß einem der Ansprüche 1 bis 10, dass zwei Schritte umfasst, bestehend aus:

    a. Betreiben des optischen Artikels in einem ersten Modus, indem ein erstes elektrisches Feld mit einer ersten Spannung erzeugt wird,
    b. Umschalten in einen zweiten Modus, indem ein zweites elektrisches Feld mit einer zweiten Spannung, die von der ersten Spannung unterscheidet, verschieden ist,

    wobei entweder die erste Spannung oder die zweite Spannung so gewählt wird, dass die Flüssigkristalle der flüssigkristallinen Mischung ausgerichtet werden, und die andere der ersten Spannung bzw. zweiten Spannung 0 V beträgt.


**Revendications**

1. Dispositif optique comprenant :

    - un aérogel situé dans une structure d'encapsulation,
    - un matériau non optiquement isotrope (30) présentant un indice de réfraction qui peut être modifié lors de la soumission dudit matériau à un champ électrique, de préférence un mélange de cristaux liquides, incorporé dans l'aérogel, et
    - une première et une deuxième électrode (12) agencées pour générer un champ électrique dans la structure d'encapsulation,

    dans lequel le dispositif optique est approprié pour faire partie d'un verre de lunettes.

2. Dispositif optique de la revendication 1, dans lequel le matériau non optiquement isotrope est dans un état isotrope quand aucun champ électrique n'est appliqué dans la structure d'encapsulation.

3. Dispositif optique de l'une quelconque des revendications 1 et 2, dans lequel l'aérogel a un taux de porosité supérieur à 80 %.

4. Dispositif optique de l'une quelconque des revendications 1 à 3, dans lequel le matériau non optiquement isotrope est un mélange de cristaux liquides nématiques.

5. Dispositif optique de l'une quelconque des revendications 1 à 4, dans lequel l'aérogel comprend des parties résiduelles de tétraméthoxysilane, tétraéthoxysilane, triméthoxysilane ou méthyltriméthoxysilane mélangées dans un liant polymère.

6. Dispositif optique de l'une quelconque des revendications 1 à 5, dans lequel l'aérogel est préparé par combinaison d'un élément du groupe constitué par le tétraméthoxysilane, le tétraéthoxysilane, le triméthoxysilane et le méthyltriméthoxysilane avec un liant polymère.

7. Dispositif optique de l'une quelconque des revendications 5 et 6, dans lequel le liant polymère est un polymère de polyacétate de vinyle avec un poids moléculaire moyen en poids supérieur à 50 000 g/mol, et de préférence supérieur à 100 000 g/mol.

8. Dispositif optique de l'une quelconque des revendications 1 à 7, dans lequel la structure d'encapsulation est complètement remplie par l'aérogel, et dans lequel l'aérogel a une épaisseur supérieure à 10 $\mu$m, de préférence supérieure à 20 $\mu$m, mieux encore supérieure à 50 $\mu$m.

9. Dispositif optique de l'une quelconque des revendications 1 à 8, dans lequel les première et deuxième électrodes sont reliées à un dispositif électronique, configuré pour contrôler le champ électrique généré dans la structure d'encapsulation, et à une source d'alimentation.

10. Dispositif optique de l'une quelconque des revendications 1 à 9, le dispositif optique étant un verre de lunettes.

11. Procédé de fabrication d'un article optique, dans lequel l'article optique est approprié pour faire partie d'un verre de lunettes, le procédé comprenant les étapes suivantes :

a. fourniture d'une structure d'encapsulation,
b. fourniture d'un mélange de cristaux liquides (30) incorporé dans un aérogel à l'intérieur de ladite structure d'encapsulation, dans lequel le mélange de cristaux liquides incorporé dans un aérogel à l'intérieur de ladite structure d'encapsulation a un indice de réfraction qui peut être modifié lors de la soumission dudit cristal liquide à un champ électrique.

12. Procédé de la revendication 11, dans lequel l'étape b comprend une première sous-étape de formation d'un aérogel et une deuxième sous-étape d'incorporation d'un mélange de cristaux liquides dans l'aérogel.

13. Procédé selon la revendication 12, dans lequel la première sous-étape comprend les éléments suivants :

a. fourniture d'une composition comprenant un solvant, un liant polymère et un monomère à base de silicone,
b. induction d'une hydrolyse du monomère à base de silicone dans la composition tout en façonnant le gel en formation en une forme s'ajustant à la structure d'encapsulation, afin de former un échantillon gélifié,
c. positionnement de l'échantillon gélifié dans une atmosphère alcoolique.

14. Procédé de la revendication 13, la première sous-étape comprenant en outre les étapes suivantes :

a. remplacement du solvant restant dans l'échantillon gélifié par du $CO_2$ liquide,
b. Mise en place de conditions telles que ledit $CO_2$ liquide se transforme en $CO_2$ supercritique,
c. refroidissement de l'échantillon obtenu en un échantillon d'aérogel,
d. incorporation du mélange de cristaux liquides dans l'échantillon d'aérogel.

15. Procédé de modification de l'indice d'un article optique selon l'une quelconque des revendications 1 à 10, comprenant deux étapes consistant à :

a. faire fonctionner l'article optique dans un premier mode en générant un premier champ électrique présentant une première tension,

b. basculer vers un deuxième mode, en générant un deuxième champ électrique présentant une deuxième tension différente de la première tension,

dans lequel une tension parmi la première tension et la deuxième tension est choisie de manière à orienter les cristaux liquides du mélange de cristaux liquides, et l'autre tension parmi la première tension et la deuxième tension est de 0 V.

**FIG. 1**

**FIG. 2**

**FIG. 3**

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016160557 A1
- US 2013309453 A1
- WO 2015136458 A
- FR 1654021
- WO 2010040954 A
- WO 2011015753 A
- WO 2011052013 A
- WO 2012080658 A

**Non-patent literature cited in the description**

- *CHEMICAL ABSTRACTS,* 9003-20-7